# FASCICULE DE BREVET EUROPEEN

(11) **EP 0 998 511 B1**
(45) Date de publication et mention de la délivrance du brevet: **04.03.2009**
(21) Numéro de dépôt: 98941483.4
(22) Date de dépôt: 29.07.1998
(51) Int. Cl.: C08G 18/80

(54) **COMPOSITION D'ISOCYANATE(S) MASQUE(S) MIXTE(S) ET SON UTILISATION EN PEINTURE POUDRE**
ZUSAMMENSETZUNG DIE GEMISCHTE MASKIERTE ISOCYANATE ENTHÄLT UND IHRE VERWENDUNG FÜR PULVERLACKE
MASKED MIXED ISOCYANATE COMPOSITION AND ITS USE IN POWDER PAINT

(30) Priorité: 30.07.1997 FR 9709723
(43) Date de publication de la demande: 10.05.2000
(73) Titulaire: RHODIA CHIMIE, 92408 Courbevoie Cédex (FR)
(72) Inventeur: BERNARD, Jean-Marie, Saint Laurent d'Agny, 69440 Mornant (FR)
(74) Mandataire: Ricalens, François
(86) Numéro de dépôt international: PCT/FR1998/001682
(87) Numéro de publication internationale: WO 1999/006462

(56) Documents cités:
- EP-A- 0 056 167
- EP-A- 0 680 984
- DE-A- 2 708 611
- FR-A- 2 266 725
- US-A- 3 317 463
- DATABASE WPI Week 8732 Derwent Publications Ltd., London, GB; AN 224199 XP002079731 "polyester composite sheet " A & JP 62 148261 A (MITSUBISHI KASEI VINYL) 2 juillet 1987

## Description

La présente invention a pour objet une nouvelle famille d'isocyanates masqués. Elle concerne plus particulièrement des isocyanates masqués au moyen de deux agents masquants et leur utilisation dans les techniques de revêtement au moyen de poudres.

Pour des raisons liées à la protection de l'environnement et à la sécurité du travail, on cherche à éliminer de plus en plus dans les techniques de revêtement, et notamment de peinture, l'utilisation des solvants.

Dans ce contexte, des techniques de revêtement au moyen de poudres se développent de plus en plus.

Les isocyanates masqués commencent à être utilisés mais leur emploi est limité par le peu de composés répondant aux exigences de la chimie des poudres.

Une première difficulté réside dans la difficulté à trouver des isocyanates ou mélanges d'isocyanates masqués qui restent sous forme de poudre dans les conditions de stockage usuelles, conditions qui peuvent varier beaucoup d'un endroit à un autre. Cela implique que ces composés aient un point de fusion et/ou de transition vitreuse (Tg) relativement élevé.

Les dérivés, objet de la présente étude, n'ont pas toujours un point de fusion franc, aussi dans ce cas détermine-t-on un point de fusion apparent soit au banc Koffler, soit à l'aide d'une méthode de type dite capillaire (par exemple point de fusion dit "de Büchi").

Un point de transition vitreuse peut être mesuré par les techniques d'analyse thermique différentielle (ATD)

Il faut également que ces composés aient des points de transition vitreuse et des points de fusion suffisamment bas pour qu'ils puissent réagir dans les conditions d'utilisation des poudres.

Il faut en outre que les composés issus des réactions de réticulation ne soient délétères ni pour la santé humaine ou animale, ni pour l'environnement.

C'est pourquoi un des buts de la présente invention est de fournir une nouvelle famille d'isocyanates masqués qui réponde aux contraintes évoquées ci-dessus.

Un autre but de la présente invention est de fournir des compositions utilisables dans le revêtement au moyen de poudres et qui contiennent des isocyanates masqués.

Un autre but de la présente invention est de fournir un procédé de synthèse des isocyanates répondant aux contraintes ci-dessus.

Ces buts et d'autres qui apparaîtront par la suite sont atteints au moyen d'une composition dont la composante isocyanate est formée d'isocyanate(s) au moins partiellement masqué(s), ladite composition étant une composition masquée par au moins deux agents de masquage dont au moins un présente une fonction carboxyliques non carbonée et répond à la formule :

Ar(R)ₙ(Y-Z)ₘ(OH)ₚ (I)

où
- Ar est un reste aromatique sur lequel est greffé n substituants R, m fonctions polaires Z et p fonctions hydroxyles; p étant au moins égal à 1 ;
- R représente une chaîne hydrocarbonée ;
- Z est une fonction choisie parmi la fonction acide carboxylique et ses sels ;
- les valeurs de n, m et p sont telles que la somme n + m + p soit au plus égale au nombre de sommets substituables ;
- Y représente une liaison simple ou est choisi parmi les groupements divalents, plus particulièrement -O-, -S-, NR'-, -CR'R"- avec R' et R" choisis parmi les radicaux hydrocarbonés de 1 à 6 atomes de carbone et l'hydrogène ; ledit agent de masquage présentant une fonction carboxylique représentant en équivalent au moins 10% de l'ensemble des agents de masquage.

La fonction carboxylique est avantageusement en mélange intime avec la composante isocyanate de la composition. Pour ce faire, il est même souhaitable que ladite fonction carboxylique soit entée sur la composition par réaction d'un précurseur de la ladite composition d'un agent porteur de fonction carboxylique et d'une fonction réagissant avec une fonction isocyanate libre. En d'autres termes, il est souhaitable que la fonction carboxylique soit greffée sur le système isocyanate par l'intermédiaire d'un agent portant à la fois une fonction réactive (c'est-à-dire à hydrogène dit "mobile") avec la fonction isocyanate et une fonction carboxylique (COOH sous forme de sel ou avantageusement libre).

Cet agent porteur d'une fonction carboxylique et d'une fonction réactive (c'est-à-dire à hydrogène dit mobile) avec la fonction isocyanate, est avantageusement un agent de masquage. Cela signifie qu'il se libère (test à l'octanol) à une température au plus égale à 250°C, avantageusement à 200°C (2 chiffres significatifs), de préférence 180°C.

Lorsque les fonctions carboxyliques sont portées par des agents qui ne se libèrent pas dans les conditions de cuisson, pour préserver le pouvoir réticulant il est souhaitable que la quantité d'acide portée par des agents qui ne se libère pas, soit au plus de 1/2, avantageusement 1/3 de la totalité des fonctions isocyanates (libres, masquées et liées à un agent masquant non libérable).

Les agents masquants les plus couramment utilisés sont ceux cités par M. WICKS dans son article "blocked isocyanates"[Progress in Organic Coatings (1975), vol. 3, p. 73].

Dans le cadre de la présente invention, on préfère ceux dont la température de déblocage (ou démasquage) d'avec les isocyanates aliphatiques est au moins égale à 90°C, avantageusement à 100°C (deux chiffres significatifs), de préférence à 110°C. (Cf. infra : test à l'octanol).

Il est souhaitable que la température de transition vitreuse (Tg) de l'isocyanate masqué lorsque l'agent de masquage considéré est utilisé seul pour masquer l'isocyanate visé par l'homme de métier ne soit pas très en dessous de 0°C (température au moins égale à environ 260°K, avantageusement à environ 270°K, de préférence à environ 280°K). En effet la fonction carboxylique, en général, ne permet guère d'augmenter la température de transition vitreuse (Tg), de plus 30°C. Cela est particulièrement vrai pour les isocyanates préférés (comme l'HDT) de la présente invention, à savoir les isocyanates issus majoritairement (c'est-à-dire représentant au moins la moitié) de monomères (par exemple l'HDI) présentant au moins une, avantageusement deux, fonctions aliphatiques qui ne soit ni secondaire, ni tertiaire ni néopentylique.

Dans la présente description le terme "environ" est employé pour mettre en exergue le fait que les valeurs qui le suivent correspondent à des arrondis mathématiques et notamment que lorsque le ou les chiffres les plus à droite d'un nombre sont des zéros, ces zéros sont des zéros de position et non des chiffres significatifs, sauf bien entendu s'il en est précisé autrement.

Les agents masquants peuvent se répartir en trois groupes principaux :
⇒ ceux dont l'hydrogène mobile est porté par un chalcogène,
⇒ ceux dont l'hydrogène mobile est porté par un azote,
⇒ ceux dont l'hydrogène mobile est porté par carbone.

Parmi ceux dont l'hydrogène mobile est porté par un chalcogène (de préférence légers, à savoir soufre et oxygène), on utilise surtout ceux où i chalcogène est un oxygène ; parmi ces derniers, on peut notamment citer :
- les produits à séquence >N-OH, comme par exemple les oximes (=N-OH) ou les hydroxy imide ([-CO-]₂N-OH) ; et
- les phénols (lato sensu), surtout ceux dont le noyau aromatique est appauvri en électron, tels que les hydroxypicolines et les hydroxybenzoates (cf. par exemple EP-A 680 984 et WO 98/4608).

On peut également citer les composés décrits dans la demande EP-A 661 278.

Parmi ceux dont l'hydrogène mobile est porté par un azote, on peut notamment citer :
- les amides monosubstitués, et en particulier les lactames (le plus utilisé est le caprolactame),
- les imides ([-CO-]₂N-H), surtout cycliques comme le succinimide,
- les hétérocycles azotés insaturés, notamment à 5 chaînons (avantageusement doublement insaturés), comportant de préférence au moins deux hétéroatomes (de préférence azote) ; parmi ces derniers on peut citer les diazoles (tels les glyoxalines et les pyrazoles), les triazoles, voire les tétrazoles.
- On peut également citer les composés décrits dans la demande EP-A 661 278. Les agents de masquage dont l'hydrogène mobile est porté par carbone, sont essentiellement des composés de nature malonique, c'est-à-dire un radical RCH< portant deux groupes électroattracteurs (tels que carbonyle [par exemple cétone, acide, ester, voire sel d'acide], nitrile, Rf ou [perfluoroalcoyle]).

Il est souhaitable, pour éviter de trop alourdir les molécules masquées, que les agents masquants non porteurs de ladite fonction carboxylique non carbonée, présentent au plus 10 atomes de carbone, avantageusement au plus 7 atomes de carbone, de préférence au plus 5.

Il est plus aisé et donc préférable que le groupe masquant porte l'hydrogène mobile réagissant avec la fonction isocyanate par l'intermédiaire d'un oxygène ou d'un azote pour donner l'enchaînement -NH-CO-O- (c'est-à-dire R-NCO + HO- → R-NH-CO-O-) ou l'enchaînement -NH-CO-N< (c'est-à-dire R-NCO + HN<- → R-NH-CO-N<).

Ainsi ladite composante isocyanate est une composition masquée par au moins deux agents de masquage dont au moins un présente une fonction carboxylique non carbonée, c'est-à-dire que la fonction carboxylique ne porte pas de radical carboné en dehors de celui qui correspond à l'acide, ainsi une fonction carboxylique non carbonée ne comprend pas les esters.

Ladite fonction carboxylique non carbonée est choisie parmi les acides et leur sels (de préférence minéraux). Il est souhaitable que ladite fonction carboxylique non carbonée soit une fonction acide (-COOH). La forme acide libre est préférée.

Ainsi il est possible de prévoir plusieurs groupes (de préférence 2 pour des raisons d'économie) masquant les fonctions isocyanates. Cette diversité peut être réalisée par mélange de divers composés masqués (en général par un seul groupe) ou de préférence par coréaction (successive en faisant réagir l'un puis l'autre agent de masquage ou simultanée en réalisant l'action de masquage sur le mélange des agents de masquage).

La présence d'une fonction acide carboxylique (-COOH) et notamment d'une fonction acide carboxylique directement greffée sur un noyau aromatique, avantageusement un noyau benzénique permet d'augmenter la température de fusion de l'isocyanate masqué. Il est toutefois préférable pour préserver les excellentes qualités mécaniques du système selon la présente invention que la quantité de fonction acide présente (en équivalent) soit au plus égale à environ 9/10, avantageusement à environ 4/5, de préférence à 2/3 des fonctions isocyanates masquées. Les effets fastes des fonctions acides sur la température de transition vitreuse (Tg) se font déjà sentir à partir d'environ 10% mais il est souhaitable d'atteindre une proportion d'au moins 20%. La température de fusion et la température de transition vitreuse (Tg) croissent continûment avec la teneur en acide jusqu'à 100%. Il est toutefois préférable que la teneur en agent masquant porteur d'une fonction carboxylique non carbonée soit au plus de 90%.

Selon une mise en oeuvre de la présente invention, ces groupes masquant une composante isocyanate, peuvent être tous, tels que définis ci-dessus (cf. formule (I)) ou bien ne répondre que pour certains d'entre eux à de telles définitions. Dans ce dernier cas, il est préféré que ceux (c'est-à-dire la somme de ceux) qui sont porteurs d'une fonction carbonyle (ester ou acide) répondent avantageusement à la formule ci-dessus (I) et correspondent au moins à environ 10% (exprimée en fonction isocyanate masquée), avantageusement à environ 20%, de préférence à 1/3.

Ainsi une des mises en oeuvre parmi les plus intéressantes consiste à utiliser des isocyanates masqués au moins partiellement par un composé porteur d'une fonction acide, avantageusement par un composé de formule I où Z est une fonction acide. Il est conseillé que l'isocyanate soit alors masqué par un autre groupe que celui porteur de la fonction acide et que la fonction acide du système masquant soit compris entre 90 et 10% (exprimé en fonction isocyanate masquée). L'autre ou les autres agents masquants peuvent être soit des agents masquants en eux-mêmes connus (répondant aux contraintes de température de libération ou de démasquage spécifiées dans la présente description), soit un ester répondant à la formule I. C'est ce dernier terme de l'alternative qui est un des modes préférés.

Pour les synthèses des composés selon la présente invention, on peut se reporter aux modes opératoires généraux, notamment ceux de la demande de brevet N° EP 0680 984 A qui donnent de bons résultats pour l'opération de masquage (éventuellement partielle) par un composé de la formule I.

Curieusement la présence de groupe carboxylique ne pose aucun problème pour l'opération de masquage. Les fonctions masquantes réagissent comme si les groupes carboxyliques n'étaient là. Il est toutefois préférable de mener la réaction de masquage à des températures d'au plus environ 150°C, avantageusement 130°C. de préférence à 110°C (si on désire un taux d'isocyanate libre particulièrement bas).

La présence de base organique catalyse la réaction (voir infra) de masquage et ne dépasse en général pas 10% (en équivalent de fonction isocyanate masquée), et même 5%.

Il est préférable de réaliser la réaction, de manière qu'à la fin des additions on soit proche de la stoechiométrie isocyanate/agents masquants ± 10%, 5%, 2%.

Comme cela a déjà été mentionné selon la présente invention, il est préférable que le point de fusion du composé ou du mélange de composés obtenu présente un point de fusion apparent au moins égal à 30°C, de préférence 50°C.

Il est également préférable que la température de transition vitreuse soit au moins égale à 20°C, avantageusement à environ 40°C.

Il est préférable de choisir les composés selon la présente invention de manière qu'ils réagissent complètement avec un alcool primaire à 250°C en moins d'une demi-heure.

On considère que la réaction est complète si elle est réalisée à 90% ou plus.

Ainsi que cela a été mentionné plus haut, les isocyanates pour lesquels l'invention est la plus intéressante sont ceux dont l'atome d'azote est lié à un carbone d'hybridation sp³, et plus particulièrement aliphatiques, et notamment aux polyméthylènes diisocyanates (par exemple TMDI TétraMéthylène-Dilsocyanate et HMDI [HexaMéthylèneDilsocyanate = OCN - (CH₂)₆ - NCO]) et leurs différents dérivés de condensation (biuret, etc.) et de di- et de "trimérisation" (dans le domaine considéré, on appelle trimère les mélanges issus de la formation de cycles isocyanuriques à partir de trois fonctions isocyanates ; en fait, il y a à côté du trimère vrai des produits plus lourds issus de la trimérisation).

Selon la présente invention, Il est souhaitable et parfois nécessaire que le pourcentage de fonction (donc exprimée en équivalent) isocyanate libre résiduelle attachée à un squelette comportant un enchainement polyméthylène exocyclique (cf. supra) soit au plus égal à 5%, avantageusement à 3%, de préférence à 1%. Les points de fusion ou de transition vitreuse les plus élevés sont obtenus avec des pourcentages ne dépassant pas 0,5%. Les teneurs en dérivé aromatique hydroxylé sur le noyau sont également avantageusement faibles c'est-à-dire au plus égales à 5%, avantageusement à 3%, de préférence à 1%.

En revanche, jusqu'à une teneur en masse de 1/3, la présence dans ledit isocyanate d'oligomère (surtout le trimère) ou d'oligocondensats non masqués de monomères cycloaliphatiques tels que l'IPDT ou le nBDT ont un effet très favorable sur la température de transition vitreuse (Tg) et ne gènent en aucune façon l'obtention de revêtement de bonne qualité. De telles compositions peuvent aisément être obtenues par mélange du trimère non masqué dans le composé masqué fondu.

Selon la présente invention, l'isocyanate est avantageusement masqué par au moins un groupe masquant portant au moins une fonction dérivée des fonctions acide et notamment les fonctions acide et ester. Le masquage peut être mixte et mettre en jeu plusieurs groupes masquants.

Il est souhaitable que dans la structure du ou des isocyanate(s), la partie du squelette reliant deux fonctions isocyanates comporte au moins un enchaînement polyméthylène (CH₂)π où π représente un entier de 2 à 10, avantageusement de 4 à 8. Cette préférence joue sur les performances mécaniques. Quand il y a plusieurs enchaînements, ces derniers peuvent être semblables ou différents. En outre, il est souhaitable que l'un au moins, de préférence tous ces enchaînements, soient libres en rotation et donc exocycliques.

Le taux de libération est quantifié par le test à l'octanol (voir infra).

Selon la présente invention, l'isocyanate masqué, pur ou en mélange, est issu d'un polyisocyanate, c'est-à-dire possédant au moins deux fonctions isocyanates, avantageusement plus de deux (possibilités de valeurs fractionnaires puisqu'il s'agit en général de mélange d'oligomères plus ou moins condensés), lequel est lui-même le plus souvent issu d'une précondensation ou d'une prépolymérisation de diisocyanate unitaire (parfois qualifié dans la présente description de "monomère").

D'une manière générale, la masse moléculaire moyenne de ces prépolymères ou de ces précondensats est au plus égale à 2000 (un chiffre significatif), plus couramment à 1000 (un chiffre significatif de préférence deux).

Une exception notable à ces valeurs réside dans les précondensats entre des polyols de masse moléculaire supérieure à 2000 et inférieure à 15000. Il s'agit de la masse moléculaire en chiffre, M̅n , qui varie entre 2000 et 15000 g/mol. La masse moléculaire est déterminée par chromatographie par perméation de gel (GPC). La technique utilise comme gels, deux gels de polystyrène (ultrastyragel^{®} à 10⁴ et 500 Ä), le THF comme solvant et le soufre comme standards. Toutefois ces prépolymères ne sont pas les meilleurs.

Ainsi, parmi les polyisocyanates utilisés pour l'invention, on peut citer ceux du type biuret et ceux dont la réaction de di- ou trimérisation a conduit à des cycles à quatre, cinq ou six chaînons. Parmi les cycles à six on peut citer les cycles isocyanuriques issus d'une homo- ou d'une hétéro-trimèrisation de divers diisocyanates seuls, avec d'autre(s) isocyanate(s) [mono-, di--, ou polyisocyanate(s)] ou avec du gaz carbonique (ou bioxyde de carbone). Dans ce cas on remplace un azote du cycle isocyanurique par un oxygène. Les oligomères à cycles isocyanuriques sont préférés.

Les polyisocyanates préférés sont ceux qui présentent au moins une fonction isocyanate aliphatique. En d'autres termes, au moins une fonction isocyanate masquée selon l'invention est reliée au squelette par l'intermédiaire d'un carbone de type sp³ portant avantageusement un atome d'hydrogène, de préférence deux. Il est souhaitable que ledit carbone de type sp³ soit lui-même porté par un carbone de type sp³ et avantageusement muni d'un, de préférence de deux atomes d'hydrogène, et ce pour éviter que la fonction isocyanate considérée soit en position néopentylique. En d'autres termes, il est conseillé de choisir comme monomères (lesquels sont, en général, porteurs de deux fonctions isocyanates), au moins un composé qui porte au moins une fonction aliphatique qui ne soit ni secondaire ou tertiaire, ni néopentylique.

En cas de mélange obtenu à partir de plusieurs (en général, deux) types de monomères, il est préférable que celui ou ceux des monomères qui répondent au conditions ci-dessus et/ou (avantageusement "et") à la condition sur la présence d'enchaînement polyméthylène (CH₂)π représentent au moins 1/3, avantageusement 1/2, de préférence 2/3 des fonctions isocyanates masquées: Ainsi au cours de l'étude selon la présente invention, il a été obtenu d'excellents résultats avec des mélanges comportant 2/3 d'HMDT ("trimère" d'Hexaméthylène diisocyanate) avec de l'IPDI ou de l'IPDT ("trimère" d'IPDI), les deux étant masqués selon l'invention (le nBDI, norbornane diisocyanate et son trimère sont similaires).

On préfère bien sûr le cas où la totalité des isocyanates sont aliphatiques et même répondent au critère ci dessus.

Selon une mise en oeuvre particulièrement avantageuse de la présente invention, on peut utiliser comme agent de masquage porteur de ladite fonction carboxylique non carbonée, un agent répondant à la formule générale de ceux visés dans la demande européenne EP-A- 661 278 page 4, lignes 17-26. Le ou les autres agents peuvent aussi répondre ladite formule générale, c'est le cas du couple d'agent acide parahydroxybenzoïque/parahydroxybenzoate d'alcoyle.

Les agents conduisant au(x) groupe(s) masquant(s) caractéristique(s) de l'invention sont avantageusement choisis parmi ceux qui sont issus de la condensation d'un dérivé aromatique hydroxylé sur le noyau et portant une fonction choisie parmi les fonctions carbonyles avec un isocyanate. Il va sans dire que la condensation se fait sur la fonction phénol.

Il convient de choisir parmi les membres de cette famille ceux pour lesquels il est possible de déterminer un point de fusion apparent, cette mesure étant réalisée à température ambiante (20°C). Ce point de fusion doit être au moins égal à 30°C (un chiffre significatif), avantageusement à 50°C.

Parmi les composés de la formule (I), on choisira les acides et leur sels (alcalin, alcalino terreux d'ammonium et/ou de phosphonium quaternaires) comme premier agent masquant, mais on pourra choisir les autres comme second ou troisième.

Ar(R)ₙ(Y-Z)ₘ(OH)ₚ (I)

où Ar est un reste aromatique sur lequel est greffé n substituants R, m fonctions polaires Z choisies parmi les groupements carbonyles, et p fonctions hydroxyles.

Les valeurs de n, m et p sont telles que la somme n + m + p soit au plus égale au nombre de sommets substituables, avantageusement p est au plus égal à 2, de préférence il est égal à 1.

Avantageusement m est au plus égal à deux, de préférence m est égal à 1.

Avantageusement n est au plus égal à 3, de préférence choisi parmi zéro, 1, et 2, plus préférentiellement égal à zéro.

R représente des substituants indifférents pour la réaction de masquage et en général correspond à des chaînes hydrocarbonées, le plus souvent des chaînes alcoyles au sens étymologique du terme, à savoir un alcool auquel on a enlevé sa fonction hydroxyle.

Deux substituants vicinaux R peuvent être reliés entre eux pour former un cycle qui peut être aromatique par exemple.

Z est choisi parmi les groupements présentant une fonction carbonyle. Parmi ces fonctions, il convient de citer les fonctions alcoxycarbonyles (ou en d'autres termes les fonctions esters), la fonction amide, la fonction cétone avec la condition préférentielle qu'il n'y ait pas d'hydrogène acide [en d'autres termes la fonction n'est avantageusement pas porteuse d'hydrogène ou si elle en porte le pKa correspondant est au moins égale à environ 20 (un chiffre significatif de préférence 2), plus préférentiellement au moins égale à environ 25] en a de la fonction carbonyle (ester, cétone ou amide). Ainsi les amides (y compris lactame, voire urée) préférés sont avantageusement substitués, de préférence suffisamment pour qu'il n'y ait pas d'hydrogène sur l'azote de la fonction amide ou de manière qu'il n'y ait pas d'hydrogène réactif.

Où Y est choisi parmi les groupements divalents, avantageusement -O-, -S-, NR'-,-CR'R"- avec R' et R" choisis parmi les radicaux hydrocarbonés, avantageusement alcoyles, de 1 à 6 atomes de carbone, avantageusement de 1 à 4, de préférence méthyle, plus préférentiellement hydrogène, et de préférence Y représente une liaison simple.

Il est préférable que la ou les fonctions polaires Z choisies parmi les fonctions carbonyles ne soient pas vicinales du groupe Z comme par exemple dans l'acide salicylique.

Le reste aromatique Ar est constitué d'un ou plusieurs noyaux avantageusement condensés, hétéro- ou homocycliques. Il est préférable que Ar ne comporte pas plus de deux noyaux, et de préférence pas plus d'un noyau.

Le reste aromatique Ar peut être constitué d'un ou plusieurs noyaux hétéro- ou homocycliques, le plus souvent homocyclique en raison de leur facilité d'accès. Il convient toutefois de souligner l'intérêt des hétérocycles à 6 chaînons qui présentent une température de libération très inférieure à celle des homocycles correspondants.

Il est souhaitable que le nombre total de carbones du dérivé aromatique hydroxylé sur le noyau soit au plus égal à 20, de préférence à 10 (un chiffre significatif).

Ce noyau est avantageusement à 6 chaînons, les chaînons étant constitués de carbone ou d'azote avec le nombre de substituants nécessaires à la valence de ces atomes.

Parmi les acides et dérivés, notamment esters, donnant les résultats les plus satisfaisants, il convient de citer les acides greffés sur un noyau benzénique ou sur des noyaux pyridiniques. Ainsi, les acides métahydroxy-, et surtout parahydroxybenzoïques, et leurs dérivés donnent de bons résultats.

Selon une variante particulièrement avantageuse de la présente invention, on peut associer les acides hydroxyarylcarboxyliques, et notamment les hydroxybenzoïques avec un (ou plusieurs) des agents usuels de masquage, tels que oxime, lactame, pyrazole, triazole dès lors qu'ils répondent aux contraintes de température de transition vitreuse (Tg) et de point de fusion.

Les associations comportant au moins un triazole, avantageusement non substitué, et au moins un agent porteur de fonction carboxylique, en particulier choisi(s) parmi les acides hydroxyarylcarboxyliques, sont particulièrment intéressantes.

Ainsi, il est souhaitable que ledit agent masquant présentant une fonction carboxylique représente en équivalent au moins 10% de l'ensemble des agents masquants, avantageusement au moins 20% de l'ensemble des agents masquants, de préférence 1/3 mais les effets sont très marqués lorsque l'on approche ou dépasse 50%.

Toutefois, lorsque les fonctions carboxyliques sont portées par des agents qui ne se libèrent pas dans les conditions de cuisson, pour préserver le pouvoir réticulant il est souhaitable que la quantité d'acide portée par des agents qui ne se libère pas, soit au plus de 1/2, avantageusement 1/3 de la totalité des fonctions isocyanates (libres, masquées, liées à un agent masquant non libérable).

Pour favoriser la forme solide, ledit agent masquant portant une fonction carboxylique présente au plus par agent masquant 4, avantageusement 2 groupements méthyle ou méthylène libre en rotation (c'est-à-dire non engagés dans un cycle).

Pour réduire la température de durcissement (de réticulation), on peut ajouter à la formulation des catalyseurs de formation d'uréthanne comme le DBTDL (dibutyldilaurate d'étain), ajoutés directement dans le prémalaxage ou en tant que mélange maître.

Les polyols utilisables avec les composés selon la présente invention sont ceux connus de l'homme de métier.

Les additifs également.

Les peintures en poudre, qui font l'objet de la présente invention, peuvent avantageusement être fabriquées en malaxant en fusion les composés de la formulation. D'abord, on les prémalaxe dans un malaxeur puis on les fait fondre, on les homogénéise et les disperse dans une extrudeuse à une ou plusieurs vis.

Il est souhaitable que la température de mélange de malaxage et d'extrusion soit au plus égale à environ 130°C, avantageusement à environ 110°C, de préférence à 100°C (3 chiffres significatifs). Il est souhaitable que la température d'extrusion soit au moins égale à environ 60°C, avantageusement à environ 70°C, de préférence aux alentours de 80-90°C. On laisse refroidir la matière extrudée obtenue, on la passe dans un moulin jusqu'à l'obtention d'une peinture présentant la granulométrie souhaitée (en général d₉₀ est au plus égal à environ 200 micromètres, avantageusement à 100 micromètres (deux chiffres significatifs) et d₁₀ au moins égal à environ 20 micromètres, avantageusement à environ 50 micromètres) en vue de son application sur des supports métalliques comme l'acier, l'aluminium ou d'autres alliages, le verre, le plastique, le bois.

Le rapport entre le(s) polyol(s) et le(s) isocyanate(s) est défini par la stoechiométrie de déblocage. On choisit en général la quantité stoechiométriquement nécessaire d'isocyanates pour réagir avec la totalité des hydroxyles libres, avec une tolérance de 20%, avantageusement de 10%, de préférence de 5%. Comme il est préférable d'être en excès d'isocyanates, on préfère les fourchettes légèrement décalées. En d'autres termes, la quantité d'isocyanates à ajouter est avantageusement au moins égale à environ 90% et au plus égale à environ 120% de la quantité stoechiométrique ; de préférence elle est au moins égale à 95% et au plus égale à environ 110% de la quantité stoechiométrique, l'intervalle le plus fréquent, et donc le plus souhaitable, étant au moins égal à 100% (3 chiffres significatifs) et au plus égal à 105% de la quantité stoechiométrique. Lorsque l'on utilise des systèmes présentant une forte proportion d'acide libre (par exemple au moins 2/3 des fonctions isocyanates masquées, voir supra) on peut envisager d'augmenter le rapport entre isocyanate et fonction hydroxyle de 10 à 30 points (%) environ par rapport aux valeurs ci-dessus.

Les catalyseurs qui sont susceptibles d'être utilisés comme catalyseurs de la réaction de masquage, ne nuisent en aucune façon à la qualité des revêtements. Si l'on utilise des formulations favorisant un revêtement mat ou satiné, ils en accusent le caractère mat, notamment dans le cas des formulations dont le caractère mat est lié à des fonctions carboxyliques (voir notamment la demande PCT WO 98/04608). Lorsque l'on utilise des formulations brillantes elles favorisent la réticulation.

Ainsi, des bases organiques dont la fonction basique est portée par un atome d'azote ou de phosphore, l'azote étant préféré, peuvent être présentes dans la composition. Il est souhaitable que l'atome basique ne porte pas d'hydrogène. La basicité est au moins égale à celle des noyaux pyridiniques (par exemple pyridine *stricto sensu,* picolines, quinoléine). les bases préférées sont les phosphines ou de préférence les amines tertiaires. Les amines tertiaires peuvent présenter depuis 3 jusqu'à environ 50 atomes de carbone par fonction basique (rappelons qu'il est plus pratique qu'il n'y en ait qu'une par molécule). Les amines lourdes, surtout les grasses ont un effet favorable sur l'aspect lisse de surface peinte.

Les amines ont un effet également favorable sur les propriétés mécaniques, ce qui indique une catalyse de la réticulation en phase poudre.

Il est, certes, préférable que les bases organiques soient, per se, peu volatiles (Eb au moins égale à 80°C, avantageusement à 100°C, de préférence 200°C), mais, dans les conditions de réticulation de poudres, l'observation de la faible volatilité n'est pas très contraignante et est notamment aisément atteinte dès lors qu'il y a des fonctions acides libres dans le liant en quantité au moins égale à la quantité de base (exprimée en équivalents). Sinon on peut prévoir d'utiliser des bases plus lourdes, c'est-à-dire dont la masse moléculaire est au moins égale à 100, avantageusement à 180, de préférence grasses, c'est-à-dire dont la masse moléculaire est supérieure à 250. Les bases organiques peuvent être pures ou en mélange. Les amines peuvent comporter d'autres fonctions et notamment les fonctions correspondant aux fonctions des acides aminés et des fonctions éther cyclique comme la N-méthylmorpholine, ou non. Ces autres fonctions sont avantageusement sous une forme qui ne réagit pas avec les fonctions isocyanates.

La quantité d'amine peut être au moins égale à environ 1% (en équivalent), avantageusement à 2%, de préférence à 3% des fonctions isocyanates masquées dans la poudre. Les amines peuvent être utilisées seules ou en combinaison avec les autres composants des peintures poudre.

La poudre obtenue peut être appliquée avec un pistolet électrostatique ou par un lit fluide. L'application préférée de la présente invention est celle effectuée avec le pistolet électrostatique à charge et à effet Corona ou par frottement (triboélectrique).

Le substrat sur lequel la peinture est appliquée, principalement de l'acier, l'aluminium, peut ou non être préchauffé avant l'application. Une fois appliquée, la poudre est fondue et durcie au four pendant 10 minutes à 2 heures, à une température comprise entre 140 et 220°C selon que le système est ou non catalysé, en général pendant 10 à 30 mn, à une température variant de 180°C à 220°C.

Compte tenu de ce qui précède, l'homme de métier adaptera la cuisson en se rappelant que l'augmentation de la température de cuisson permet de diminuer la durée et réciproquement.

Les compositions et composantes isocyanates selon la présente invention peuvent être utilisées en poudre. Elles peuvent aussi l'être en voie dissoute. Elles présentent un intérêt particulier pour l'utilisation sous forme de suspension, surtout lorsque la teneur en isocyanate libre est faible (avantageusement rapport (en équivalent) isocyanate(s) libre(s)/isocyanate total au plus égal à 5%, de préférence à 2%).

Les exemples non limitatifs suivants illustrent l'invention.

Dans tous les exemples, HDT ou HMDT signifie hexaméthylène diisocyanate trimère connu sous le nom commercial de TOLONATE^{®} HDT et IPDT signifie Isophorone diisocyanate trimère.

### TEST A L'OCTANOL

### définitions

- Température de "libération" (ou de "déblocage") :: c'est la température la plus faible à laquelle l'agent de masquage de l'isocyanate masqué est déplacé à hauteur de 9/10 (arrondi mathématique) par un monoalcool primaire (l'alcool primaire est en général l'octanol).
- Durée de vie au stockage :: Pour s'assurer une bonne durée de vie au stockage, il est préférable de choisir des fonctions isocyanates masquées dont le test à l'octanol montre une "libération" à 80°C, avantageusement à 90°C, au plus égale à 90%.
- Avancement de la réaction :: On considère que la réaction est complète si elle est réalisée à plus de 90%.

### mode opératoire

Dans un tube, type SCHOTT, avec agitation magnétique, on charge environ 5 mmol en équivalent NCO masqué protégé à évaluer.

On ajoute 2,5 à 3 ml de dichloro-1,2 benzène (solvant), l'équivalent d'octanol-1 (5 mmol, soit 0,61 g, et éventuellement avec le catalyseur à tester avec le groupe masquant).

Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide et le résidu est analysé en RMN, Masse et infra rouge.

A partir de ces données, on évalue le pourcentage de fonction isocyanate masquée condensée avec l'octanol-1.

Lorsque le point d'ébullition d'un des constituants est supérieur à la température que l'on désire tester on travaille alors à la pression autogène correspondante.

### Exemple 1 de synthèse d'HDT masqué par un mélange (80/20 mole à mole) de parahydroxybenzoate de méthyle et d'acide parahydroxy-benzoique

Dans un réacteur thermostaté de 500 ml, équipé d'une agitation mécanique, on introduit 136,2 g de produit TOLONATE^{®} HDT dont la teneur en fonctions isocyanates (NCO) est de 0,521 mole pour 100 g de HDT. On ajoute successivement 86,4 g de parahydroxybenzoate de méthyle et 19,6 g d'acide parahydrobenzoïque. La température du milieu réactionnel portée à 86°C et 3,7 g de triéthylamine sont alors ajoutés. La température du milieu réactionnel est alors portée à 100°C. Après 2 h45 à 100°C, le milieu réactionnel est refroidi puis broyé pour donner une poudre. Le taux de fonctions isocyanates libres est de 1,05% et la Tg du produit est de l'ordre de 30°C.

### Exemple 2 de synthèse d'HDT masqué par un mélange (65/35 mole à mole) de parahydroxybenzoate de méthyle et d'acide parahydroxybenzoïque

Dans un réacteur thermostaté de 500 ml, équipé d'une agitation mécanique, on introduit 200 g de produit TOLONATE^{®} HDT dont la teneur en fonctions isocyanates (NCO) est de 0,521 mole pour 100 g de HDT. On ajoute successivement 113,3 g de parahydroxybenzoate de méthyle et 50,4 g d'acide parahydrobenzoïque. La température du milieu réactionnel est portée à 26°C et 3 g de triéthylamine sont alors ajoutés. La température du milieu réactionnel est alors portée à 93°C. Après 30 mn à 93°C, la température du milieu réactionnel est portée à 130°C. La masse fondue est soutirée, refroidie puis broyée pour donner 344 g de poudre. Le taux de fonctions isocyanates libres rapporté à l'HDT est de 1,3% et la Tg du produit est de l'ordre de 32°C. L'analyse infrarouge en pastille KBr indique la présence des bandes de la fonction acide à 2500 cm-1, une très faible teneur, voire une absence de bandes correspondant aux fonctions acides (1650 cm-1 et 1550 cm-1) et la présence des fonctions carbamates.

La teneur en fonctions isocyanates potentielles est de 12,03%.

### Exemple 3 de synthèse d'HDT masqué par un mélange (50/50 mole à mole) de parahydroxybenzoate de méthyle et d'acide parahydroxybenzoïque

On applique la même méthode que décrite dans l'exemple 2. On récupère ainsi 342 g de poudre blanche.

Le taux de NCO libres exprimé en HDT non masqué est de 0,7%, soit 0,175% en poids de fonctions NCO résiduels. La Tg du produit est de 35°C environ.

La teneur en NCO potentiels est de 11,95%.

L'analyse infrarouge présente les bandes caractéristiques du produit attendu.

### Exemple 4 de synthèse d'un mélange de (85/15% en poids) de (HDT/IPDT) masqué par un mélange (65/35 mole à mole) de parahydroxybenzoate de méthyle et d'acide parahydroxybenzoïque

On utilise le même mode opératoire que l'exemple 2 à la différence que le mélange des deux polyisocyanates HDT et IPDT (119 g et 21 g) est introduit en lieu et place de l'HDT, que les quantités en agent masquant sont ajustées et que le soutirage se fait à 160°C. Après soutirage et refroidissement, le produit est broyé.

La Tg du produit est de l'ordre de 35°C et le taux de fonctions isocyanates libres est de 0,2% en poids soit 0,82 % en HDT non masqué.

Le spectre infra rouge possède les bandes caractéristiques au produit attendu.

### Exemple 5 de synthèse d'HDT masqué par un mélange (94/6 mole à mole) de parahydroxybenzoate de méthyle et de sel de calcium de l'acide parahydrobenzoïque

Dans un réacteur thermostaté de 500 ml, équipé d'une agitation mécanique, on introduit 141,25 g de produit TOLONATE^{®} HDT dont la teneur en NCO est de 0,521 mole pour 100 g de HDT. On ajoute successivement 111,9 g de parahydroxybenzoate de méthyle, 6,07 g d'acide parahydroxybenzoïque et 4,4 g de carbonate de calcium. La température du milieu réactionnel est portée à 120°C et maintenue pendant 45 mn. Le mélange réactionnel est refroidi à 80°C et 1,3 g de triéthylamine sont alors ajoutés. La température du milieu réactionnel est alors portée à 95°C. Le milieu réactionnel est soutiré et broyé à température ambiante pour donner une poudre. Le taux de NOC libres est de 0,69% et la Tg du produit est de l'ordre de 26°C.

### Exemple 6 à 15 de synthèse d'HDT masqué par un mélange de deux agents masquants dont un porte une fonction carboxylique

Le mode opératoire est mutatis mutandis (agents masquants et pourcentage de ceux-ci) celui de l'exemple 2 lorsque l'isocyanate est de l'HDT uniquement et celui de l'exemple 3 lorsque l'isocyanate est un mélange HDT/IPDT.

| | Nature et pourcentage en masse des polyisocyanates | | Agents de masquage en % molaire par rapport aux fonctions NCO | | Tg en °C |
|---|---|---|---|---|---|
| Exemples | polyisocyanate,1 | polyisocyanate | Agent 1 | Agent 2 | |
| comparatif | HDT/100 | | Triazole/100 | | <0 |
| 7 | HDT/100 | | Triazole/90 | Acide p Hydroxy-benzoïque/10 | 19 |
| 8 | HDT100 | | Thiazole/80 | Acide p Hydroxy-benzoïque/20 | 27 |
| 9 | HDT/100 | | Triazole/70 | Acide p Hydroxy-benzoïque/30 | 29 |
| 10 | HDT/100 | | Triazole/60 | Acide p Hydroxy-benzoïque/40 | 30 |
| 11 | HDT/100 | | Triazole/50 | Acide p Hydroxy-benzoïque/50 | 38 |
| 12 | HDT/85 | IPDT/15 | Triazole/85 | Acide p Hydroxy-benzoïque/15 | 23 |
| 13 | HDT/85 | IPDT/15 | Thiazole/70 | Acide p Hydroxy-benzoïque/30 | 34 |
| 14 | HDT/70 | IPDT/30 | Triazole/85 | Acide p Hydroxy-benzoïque/15 | 38 |
| 15 | HDT/70 | IPDT/30 | Triazole/70 | Acide p Hydroxy-benzoïque/30 | 35 |

## Revendications

1. Composition isocyanate au moins partiellement masquée, **caractérisée par le fait que** ladite composition est une composition masquée par au moins deux agents de masquage dont au moins un présente une fonction carboxylique non carbonée et répond à la formule :
Ar(R)ₙ(Y-Z)ₘ(OH)ₚ (I)
où
- Ar est un reste aromatique sur lequel est greffé n substituants R, m fonctions polaires Z et p fonctions hydroxyles, p étant au moins égal à 1;
- R représente une chaîne hydrocarbonée;
- Z est une fonction choisie parmi la fonction acide carboxylique et ses sels;
- les valeurs de n, m et p sont telles que la somme n + m + p soit au plus égale au nombre de sommets substituables;
- Y représente une liaison simple ou est choisi parmi les groupements divalents, plus particulièrement -O-, -S-, NR'-, -CR'R"- avec R' et R" choisis parmi les radicaux hydrocarbonés de 1 à 6 atomes de carbone et l'hydrogène;
ledit agent de masquage présentant une fonction carboxylique représentant en équivalent au moins 10% de l'ensemble des agents de masquage.

2. Composition selon la revendication 1, **caractérisée par le fait que** ladite fonction carboxylique est entée sur la composition par réaction d'un précurseur de ladite composition avec un agent porteur de fonction carboxylique et d'une fonction réagissant avec une fonction isocyanate libre.

3. Composition selon l'une des revendications précédentes, **caractérisée en ce que** le rapport (en équivalent) entre les fonctions carboxyliques d'une part, et les fonctions isocyanates d'autre part, est au moins égal à 5% et au plus égal à 67%.

4. Composition selon l'une des revendications précédentes, **caractérisée par le fait que** le rapport (en équivalent) entre les fonctions carboxyliques d'une part, et les fonctions isocyanates (masquées, libres et ayant réagi avec l'agent porteur de fonctions carboxyliques) d'autre part est au moins égal à 10%, de préférence 20%.

5. Composition selon l'une des revendications précédentes, **caractérisée par le fait que** le rapport (en équivalent) entre les fonctions carboxyliques d'une part, et les fonctions isocyanates (masquées, libres et ayant réagi avec l'agent porteur de fonctions carboxyliques) d'autre part, est au plus égal à 33%.

6. Composition selon l'une des revendications précédentes, **caractérisée par le fait que** les fonctions carboxyliques sont portées par un agent qui ne se libère pas dans les conditions de cuisson pour préserver le pouvoir réticulant et que la quantité d'acide portée par ledit agent est au plus de 1/2 de la totalité des fonctions isocyanates (libres, masquées, liées audit agent), les conditions de cuisson étant de soumettre la composition pendant 10 minutes à 2 heures, à une température comprise entre 140 et 220°C.

7. Composition selon l'une des revendications précédentes, **caractérisée par le fait que** ledit agent de masquage présentant une fonction carboxylique non carbonée représente en équivalent au moins 20% de l'ensemble des agents de masquage.

8. Composition selon l'une des revendications précédentes, **caractérisée par le fait que** ledit agent de masquage présentant une fonction carboxylique non carbonée représente, en équivalent, entre 10% et 50% de l'ensemble des agents de masquage.

9. Composition selon l'une des revendications précédentes, **caractérisée par le fait que** ledit agent de masquage présentant une fonction carboxylique non carbonée présente au plus 4 groupements méthyle ou méthylène libre en rotation.

10. Composition selon l'une des revendications précédentes, **caractérisée par le fait que** ladite fonction carboxylique non carbonée est liée directement à un noyau aromatique.

11. Composition selon l'une des revendications précédentes, **caractérisée par le fait que** l'agent de masquage non porteur de fonction carboxylique non carbonée est choisi parmi les oximes, les lactames, les pyrazoles, les triazoles.

12. Composition selon l'une des revendications précédentes, **caractérisée par le fait que** l'agent de masquage non porteur de la fonction carboxylique non carbonée est choisi parmi les hydroxybenzoates.

13. Composition selon l'une des revendications précédentes, **caractérisée par le fait que** l'agent de masquage non porteurs de la fonction carboxyliques non carbonée présente au plus 10 atomes de carbone.

14. Composition selon l'une des revendications précédentes, **caractérisée par le fait que** ladite composition isocyanate est issue d'un masquage au moins partiel d'un mélange obtenu par oligomérisation ou oligocondensation à partir de plusieurs monomères dont l'un au moins présente au moins une fonction(s) aliphatique(s) qui n'est(ne sont) ni secondaire(s) ou tertiaire(s), ni néopentylique(s).

15. Composition selon la revendication 14, **caractérisée par le fait que** le(s) motif(s) provenant de(s) monomère(s), qui présente(nt) au moins une fonction(s) aliphatique(s) qui n'est (ne sont) ni secondaire(s) ou tertiaire(s), ni néopentylique(s), porte(nt) au moins 1/3 des fonctions isocyanates masquées.

16. Composition selon l'une des revendications précédentes, **caractérisée par le fait que** ladite composition isocyanate est issue d'un masquage au moins partiel d'un mélange obtenu par oligomérisation ou oligocondensation à partir de plusieurs monomères dont l'un au moins présente un enchaînement polyméthylène, le(s) motif(s) provenant de(s) monomère(s) qui présente(nt) au moins un enchaînement polyméthylène portant au moins 1/3 des fonctions isocyanates masquées.

17. Composition selon l'une des revendications précédentes, **caractérisée par le fait que** l'agent de masquage présentant une fonction carboxylique non carbonée répond à la formule (1) dans laquelle p est égal à 1 ou à 2.

18. Composition selon l'une des revendications précédentes, **caractérisée par le fait que** l'agent de masquage présentant une fonction carboxylique non carbonée répond à la formule (1) dans laquelle Ar est un noyau benzénique.

19. Composition selon la revendication 18, **caractérisée par le fait que** l'agent de masquage présentant une fonction carboxylique non carbonée est choisi parmi les acides métahydroxy- et parahydroxybenzoïques

20. Composition selon l'une des revendications précédentes, **caractérisée par le fait qu'**elle comporte en outre une base organique, plus particulièrement une amine tertiaire.

21. Utilisation dans une formulation de peinture poudre de la composition selon l'une des revendications précédentes.

22. Revêtement **caractérisé par le fait qu'**il est obtenu en utilisant une formulation de peinture poudre à base de la composition selon l'une des revendications précédentes.

## Claims

1. Isocyanate composition which is at least partially masked, **characterized in that** said composition is a composition masked with at least two masking agents, at least one of which contains a non-carbon-based carboxylic function and corresponds to the formula:
Ar(R)ₙ(Y-Z)ₘ(OH)ₚ (I)
in which:
- Ar is an aromatic group onto which is grafted n substituents R, m polar functions Z and p hydroxyl functions, p being at least equal to 1;
- R represents a hydrocarbon-based chain;
- Z is a function chosen from a carboxylic acid function and salts thereof;
- the values of n, m and p are such that the sum n + m + p is at most equal to the number of substitutable ring members;
- Y represents a single bond or is chosen from divalent groups, more particularly -O-, -S-, NR'- or -CR'R"- with R' and R" being chosen from hydrocarbon-based radicals of 1 to 6 carbon atoms and hydrogen;
said masking agent having a carboxylic function representing, as equivalents, at least 10% of all of the masking agents.

2. Composition according to Claim 1, **characterized in that** said carboxylic function is grafted onto the composition by reaction of a precursor of said composition with an agent bearing a carboxylic function and of a function which reacts with a free isocyanate function.

3. Composition according to one of the preceding claims, **characterized in that** the ratio (in equivalents) between the carboxylic functions, on the one hand, and the isocyanate functions, on the other hand, is at least equal to 5% and not more than 67%.

4. Composition according to one of the preceding claims, **characterized in that** the ratio (in equivalents) between the carboxylic functions, on the one hand, and the isocyanate functions (which are masked, free and which have reacted with the agent bearing carboxylic functions), on the other hand, is at least equal to 10%, preferably 20%.

5. Composition according to one of the preceding claims, **characterized in that** the ratio (in equivalents) between the carboxylic functions, on the one hand, and the isocyanate functions (which are masked, free and which have reacted with the agent bearing carboxylic functions), on the other hand, is not more than 33%.

6. Composition according to one of the preceding claims, **characterized in that** the carboxylic functions are borne by an agent which is not released under the firing conditions in order to conserve the crosslinking power and **in that** the amount of acid borne by said agent is not more than 1/2 of the total amount of the isocyanate functions (which are free, masked and linked to said agent), the firing conditions being subjecting the composition to a temperature of between 140 and 220°C for 10 minutes to 2 hours.

7. Composition according to one of the preceding claims, **characterized in that** said masking agent containing a non-carbon-based carboxylic function represents, in equivalents, at least 20% of all of the masking agents.

8. Composition according to one of the preceding claims, **characterized in that** said masking agent containing a non-carbon-based carboxylic function represents, in equivalents, between 10% and 50% of all of the masking agents.

9. Composition according to one of the preceding claims, **characterized in that** said masking agent containing a non-carbon-based carboxylic function contains not more than 4 freely rotating methyl or methylene groups.

10. Composition according to one of the preceding claims, **characterized in that** said non-carbon-based carboxylic function is directly linked to an aromatic ring.

11. Composition according to one of the preceding claims, **characterized in that** the masking agent not bearing a non-carbon-based carboxylic function is chosen from oximes, lactams, pyrazoles and triazoles.

12. Composition according to one of the preceding claims, **characterized in that** the masking agent not bearing a non-carbon-based carboxylic function is chosen from hydroxybenzoates.

13. Composition according to one of the preceding claims, **characterized in that** the masking agent not bearing a non-carbon-based carboxylic function contains not more than 10 carbon atoms.

14. Composition according to one of the preceding claims, **characterized in that** said isocyanate composition is obtained from an at least partial masking of a mixture obtained by oligomerization or oligocondensation starting with several monomers, at least one of which contains at least one aliphatic function(s) which is(are) neither secondary nor tertiary nor neopentyl.

15. Composition according to Claim 14, **characterized in that** the unit(s) obtained from monomer(s) which contain(s) at least one aliphatic function(s) which is(are) neither secondary nor tertiary nor neopentyl bear(s) at least 1/3 of the masked isocyanate functions.

16. Composition according to one of the preceding claims, **characterized in that** said isocyanate composition is obtained from an at least partial masking of a mixture obtained by oligomerization or oligocondensation starting with several monomers, at least one of which contains a polymethylene chain, the unit(s) obtained from monomer(s) which contain(s) at least one polymethylene chain bearing at least 1/3 of the masked isocyanate functions.

17. Composition according to one of the preceding claims, **characterized in that** the masking agent containing a non-carbon-based carboxylic function corresponds to formula (1) in which p is equal to 1 or 2.

18. Composition according to one of the preceding claims, **characterized in that** the masking agent containing a non-carbon-based carboxylic function corresponds to formula (1) in which Ar is a benzene nucleus.

19. Composition according to Claim 18, **characterized in that** the masking agent containing a non-carbon-based carboxylic function is chosen from meta-hydroxy- and para-hydroxybenzoic acids.

20. Composition according to one of the preceding claims, **characterized in that** it also comprises an organic base, more particularly a tertiary amine.

21. Use, in a powder paint formulation, of the composition according to one of the preceding claims.

22. Coating, **characterized in that** it is obtained using a powder paint formulation based on the composition according to one of the preceding claims.

## Patentansprüche

1. Zumindest teilweise maskierte Isocyanatzusammensetzung, **dadurch gekennzeichnet, daß** es sich bei der Zusammensetzung um eine Zusammensetzung handelt, die durch mindestens zwei Maskierungsmittel maskiert ist, von denen mindestens eines eine nicht auf Kohlenstoff basierende Carboxylfunktion aufweist und der Formel:
Ar(R)ₙ(Y-Z)ₘ(OH)ₚ (I)
entspricht, worin
- Ar für einen aromatischen Rest steht, auf den n Substituenten R, m polare Funktionen Z und p Hydroxylfunktionen aufgepfropft sind, wobei p mindestens gleich 1 ist;
- R für eine Kohlenwasserstoffkette steht;
- Z für eine unter der Carbonsäurefunktion und Salzen davon ausgewählte Funktion steht;
- die Werte von n, m und p so beschaffen sind, daß die Summe n + m + p höchstens gleich der Zahl der substituierbaren Spitzen ist;
- Y für eine Einfachbindung steht oder unter zweiwertigen Gruppen, insbesondere -O-, -S-, NR'-,
- CR'R" -, wobei R' und R" unter Kohlenwasserstoffresten mit 1 bis 6 Kohlenstoffatomen und Wasserstoff ausgewählt sind, ausgewählt ist;
wobei das eine Carboxylfunktion aufweisende Maskierungsmittel in Äquivalenten mindestens 10% der gesamten Maskierungsmittel ausmacht.

2. Zusammensetzung nach Anspruch 1, **dadurch gekennzeichnet, daß** die Carboxylfunktion durch Umsetzung eines Vorläufers der Zusammensetzung mit einem Mittel mit einer Carboxylfunktion und einer mit einer freien Isocyanatfunktion reagierenden Funktion in die Zusammensetzung eingeführt wird.

3. Zusammensetzung nach einem der vorhergehenden Ansprüche, **dadurch gekennzeichnet, daß** das Verhältnis (in Äquivalenten) zwischen den Carboxylfunktionen einerseits und den Isocyanatfunktionen andererseits mindestens gleich 5% und höchstens gleich 67% ist.

4. Zusammensetzung nach einem der vorhergehenden Ansprüche, **dadurch gekennzeichnet, daß** das Verhältnis (in Äquivalenten) zwischen den Carboxylfunktionen einerseits und den Isocyanatfunktionen (maskiert, frei und mit dem Mittel mit Carboxylfunktionen umgesetzt) andererseits mindestens gleich 10%, vorzugsweise 20%, ist.

5. Zusammensetzung nach einem der vorhergehenden Ansprüche, **dadurch gekennzeichnet, daß** das Verhältnis (in Äquivalenten) zwischen den Carboxylfunktionen einerseits und den Isocyanatfunktionen (maskiert, frei und mit dem Mittel mit Carboxylfunktionen umgesetzt) andererseits höchstens gleich 33% ist.

6. Zusammensetzung nach einem der vorhergehenden Ansprüche, **dadurch gekennzeichnet, daß** die Carboxylfunktionen von einem Mittel getragen werden, das unter den Einbrennbedingungen nicht freigesetzt wird, um das Vernetzungsvermögen zu konservieren, und die Menge der von diesem Mittel getragenen Säure höchstens 1/2 der Gesamtmenge der Isocyanatfunktionen (frei, maskiert, an das Mittel gebunden) beträgt, wobei die Einbrennbedingungen so beschaffen sind, daß man die Zusammensetzung über einen Zeitraum von 10 Minuten bis 2 Stunden einer Temperatur zwischen 140 und 220°C unterwirft.

7. Zusammensetzung nach den vorhergehenden Ansprüchen, **dadurch gekennzeichnet, daß** das eine nicht auf Kohlenstoff basierende Carboxylfunktion aufweisende Maskierungsmittel in Äquivalenten mindestens 20% der gesamten Maskierungsmittel ausmacht.

8. Zusammensetzung nach den vorhergehenden Ansprüchen, **dadurch gekennzeichnet, daß** das eine nicht auf Kohlenstoff basierende Carboxylfunktion aufweisende Maskierungsmittel in Äquivalenten zwischen 10 und 50% der gesamten Maskierungsmittel ausmacht.

9. Zusammensetzung nach den vorhergehenden Ansprüchen, **dadurch gekennzeichnet, daß** das eine nicht auf Kohlenstoff basierende Carboxylfunktion aufweisende Maskierungsmittel höchstens 4 frei drehbare Methyl- oder Methylengruppen enthält.

10. Zusammensetzung nach den vorhergehenden Ansprüchen, **dadurch gekennzeichnet, daß** die nicht auf Kohlenstoff basierende Carboxylfunktion direkt an einen aromatischen Kern gebunden ist.

11. Zusammensetzung nach den vorhergehenden Ansprüchen, **dadurch gekennzeichnet, daß** das keine nicht auf Kohlenstoff basierende Carboxylfunktion tragende Maskierungsmittel unter Oximen, Lactamen, Pyrazolen und Triaziolen ausgewählt ist.

12. Zusammensetzung nach den vorhergehenden Ansprüchen, **dadurch gekennzeichnet, daß** das keine nicht auf Kohlenstoff basierende Carboxylfunktion tragende Maskierungsmittel unter Hydroxybenzoaten ausgewählt ist.

13. Zusammensetzung nach den vorhergehenden Ansprüchen, **dadurch gekennzeichnet, daß** das keine nicht auf Kohlenstoff basierende Carboxylfunktion tragende Maskierungsmittel höchstens 10 Kohlenstoffatome aufweist.

14. Zusammensetzung nach den vorhergehenden Ansprüchen, **dadurch gekennzeichnet, daß** die Isocyanatzusammensetzung aus einer zumindest teilweisen Maskierung einer durch Oligomerisation oder Oligokondensation ausgehend von mehreren Monomeren, von denen mindestens eines eine oder mehrere aliphatische Funktionen aufweist, die weder sekundär oder tertiär noch neopentylisch sind, hervorgeht.

15. Zusammensetzung nach Anpruch 14, **dadurch gekennzeichnet, daß** die aus Monomer bzw. Monomeren, das bzw. die eine oder mehrere aliphatische Funktionen aufweist bzw. aufweisen, die weder sekundär oder tertiär noch neopentylisch sind, stammende Einheit bzw. stammenden Einheiten mindestens 1/3 der maskierten Isocyanatfunktionen trägt bzw. tragen.

16. Zusammensetzung nach den vorhergehenden Ansprüchen, **dadurch gekennzeichnet, daß** die Isocyanatzusammensetzung aus einer zumindest teilweisen Maskierung einer durch Oligomerisation oder Oligokondensation ausgehend von mehreren Monomeren, von denen mindestens eines eine Polymethylenkette aufweist, hervorgeht, wobei die aus Monomer bzw. Monomeren, das bzw. die eine Polymethylenkette aufweist bzw. aufweisen, stammende Einheit bzw. stammenden Einheiten mindestens 1/3 der maskierten Isocyanatfunktionen trägt bzw. tragen.

17. Zusammensetzung nach den vorhergehenden Ansprüchen, **dadurch gekennzeichnet, daß** das eine nicht auf Kohlenstoff basierende Carboxylfunktion aufweisende Maskierungsmittel der Formel (1), worin p gleich 1 oder 2 ist, entspricht.

18. Zusammensetzung nach den vorhergehenden Ansprüchen, **dadurch gekennzeichnet, daß** das eine nicht auf Kohlenstoff basierende Carboxylfunktion aufweisende Maskierungsmittel der Formel (1), worin Ar für einen Benzolkern steht, entspricht.

19. Zusammensetzung nach Anspruch 18, **dadurch gekennzeichnet, daß** das eine nicht auf Kohlenstoff basierende Carboxylfunktion aufweisende Maskierungsmittel unter meta-Hydroxy- und para-Hydroxybenzoesäuren ausgewählt ist.

20. Zusammensetzung nach einem der vorhergehenden Ansprüche, **dadurch gekennzeichnet, daß** sie außerdem eine organische Base, insbesondere ein tertiäres Amin, enthält.

21. Verwendung der Zusammensetzung gemäß einem der vorhergehenden Ansprüche in einer Pulverlackformulierung.

22. Beschichtung, **dadurch gekennzeichnet, daß** sie unter Verwendung einer Pulverlackformulierung auf Basis der Zusammensetzung gemäß einem der vorhergehenden Ansprüche erhalten worden ist.
